# EUROPEAN PATENT SPECIFICATION

(11) **EP 0 508 731 B1**
(45) Date of publication and mention of the grant of the patent: **18.09.1996**
(21) Application number: 92303083.7
(22) Date of filing: 08.04.1992
(51) Int. Cl.: C04B 41/87, F01D 5/28, C23C 4/10

(54) **Use of an oxide coating to enhance the resistance to oxidation and corrosion of a silicon nitride based gas turbine blade**
Verwendung einer Oxidschicht zur Verbesserung der Oxydation- und Korrosionswiderstand einer Gasturbinenschaufeln aus Siliziumnitrid
Utilisation d'une couche d'oxyde pour améliorer la résistance à l'oxidation et à la corrosion d'une aube de turbine à gaz de nitrure de silicium

(30) Priority: 09.04.1991 JP 104722/91; 28.02.1992 JP 43576/92
(43) Date of publication of application: 14.10.1992
(73) Proprietor: THE TOKYO ELECTRIC POWER CO., INC., Chiyoda-ku, Tokyo 100 (JP); NGK INSULATORS, LTD., Nagoya 467 (JP)
(72) Inventor: Furuse, Yutaka, c/o The Tokyo Elec. Power Co. Inc., Tokyo 100 (JP); Endo, Yasuyuki, c/o The Tokyo Elec. Power Co. Inc., Tokyo 100 (JP); Kobayashi, Hiromichi, Yokkaichi-shi, Mie-ken 510 (JP); Sakai, Hiroaki, Nagoya 467 (JP); Ohi, Hiroyuki, Nagoya 462 (JP)
(74) Representative: Stoner, Gerard Patrick

(56) References cited:
- EP-A- 0 109 814
- EP-A- 0 111 922
- EP-A- 0 211 579
- FR-A- 2 268 769
- US-A- 4 913 961
- DATABASE WPIL Section Ch, Week 1882, 25 March 1982 Derwent Publications Ltd., London, GB; Class L02, AN 82-36096E
- DATABASE WPIL Section Ch, Week 0391, 27 April 1989 Derwent Publications Ltd., London, GB; Class L02, AN 91-018145

## Description

The present invention relates to gas turbine blades.

As well known in the art, gas turbine blades required to have high mechanical properties under high-temperature and severe conditions are formed of ceramic materials such as sintered silicon nitride and silicon carbide.

However, even gas turbine blades built up of sintered silicon nitride or carbide materials of high heat resistance decrease in thickness as they are used, because they are exposed to a high-speed combustion gas flow which oxidises, corrodes or otherwise degrades them at high temperatures.

A problem of particular significance associated with materials used for gas turbine blades exposed to the high-speed combustion gas flow is therefore to achieve good resistance to oxidation and hence good durability.

The present inventors have been able to achieve good resistance to oxidation and corrosion by applying an oxide coat onto the surface of a nonoxide ceramic material having excellent high-temperature strength and heat resistance.

In the prior art, JP-A-62/72582 (equivalent to EP-A-211579) discloses coating a zirconia layer onto a sintered silicon nitride member, eg. by plasma spraying or slurry coating, but only for the purpose of reducing the thermal conductivity of the member.

FR-A-2268769 (equivalent to US-A-3953636) disclosed the use of a microcracked surface layer of polycrystalline ceramics which might be zirconia, to improve the impact resistance of an underlying polycrystalline ceramics which might be silicon nitride.

The present invention provides the use of an oxide thin film, not thicker than 100µm and coated on the surface of a silicon nitride-based sintered part forming a blade body of a gas turbine blade, to enhance high-temperature resistance of the blade body to operational oxidation and corrosion.

At least one oxide selected from alumina, mullite, zirconia, yttria and zircon may be used as said oxide.

The thin film of oxide may be coated onto the surface of the silicon nitride-based sintered part by plasma spray coating.

The method of production of the gas turbine blade preferably includes treating the sintered part's surface mechanically, thermally or chemically to a surface roughness of 1.5µm or more as expressed in terms of ten-point average roughness (Rz), or 0.2µm or more as expressed in terms of center-line average roughness (Ra), and then coating the surface of said part with at least one oxide selected from the group consisting of alumina, mullite, zirconia, yttria and zircon by plasma spray coating.

A gas turbine blade embodying these concepts is thus obtainable by using, for the sintered part, silicon nitride or a silicon nitride composite material reinforced by dispersing, e.g., silicon carbide particles or whiskers throughout it and coating the surface of the part with at least one oxide selected from the group consisting of alumina, mullite, zirconia, yttria and zircon. The oxide coat has a thickness of 100µm or less. One reason for this is that because silicon nitride or a silicon carbide dispersion-reinforced silicon nitride composite material is different from the oxide layer in therms of the rate of thermal expansion, the oxide coat is liable to peel away or crack due to repeated heating and cooling, if it is too thick. Another reason is that, even at a thickness of the order of 100µm or less, the oxide coat is found to be effective to improve the resistance of a gas turbine blade to oxidation and corrosion.

How to produce rotor blades and nozzle vanes for gas turbines will now be explained.

A rotor blade or nozzle vane body for a gas turbine may be formed of either silicon nitride or a silicon carbide dispersion-reinforced silicon nitride composite material. In general, this body has an as-sintered or as-machined surface, which must be roughened or otherwise treated to increase its bond strength or its reactivity with respect to an oxide layer to be baked or spray-coated onto it. This may be by polishing with abrasive particles, oxidation by heating in the air and etching with hydrofluoric acid or other acids. Roughening or otherwise treating the part to increase its surface reactivity may be done with the best technique that is mainly determined by what material forms that part. According to our determination it is preferred that the surface roughness of the part be at least 1.5µm as expressed in terms of ten-point average roughness - Rz or at least 0.2µm as expressed in terms of center-line average roughness - Ra, both being measured according to JIS B 0601. This is because when the part has a ten-point average roughness Rz of at least 1.5µm or a center-line average roughness Ra of at least 0.2µm, as measured according to JIS B0601, it comes into intimate contact with the oxide.

The oxide or oxides to be formed on the surface of the part may be selected from alumina, mullite, zirconia, yttria and zircon, and may be provided in the form of a single or multi-layer. In order to prevent the oxide coat from peeling away or cracking due to a thermal expansion difference between the oxide and the part, it is desirable to provide between them an intermediate layer having a rate of thermal expansion lying halfway between theirs.

Preferably the oxide film is formed on the surface of the part by plasma spray coating, but may be achieved by coating an oxide slurry onto the part; dipping the part in the oxide; forming an oxide layer on the part by spraying, followed by firing and baking; coating a mixture of a certain metal element with its oxide onto the part or dipping the latter in the former, followed by lamination by spraying, reaction and sintering.

In this way we find that it is possible to achieve excellent high temperature mechanical properties such as creep resistance, as well as good resistance to oxidation and corrosion at high temperature.

We also find that it is possible to produce a gas turbine blade in which the oxide coat adheres well to the part and which has a high heat-resistance cycle property.

The invention is now illustrated with reference to the following examples.

### Example 1

Provided were a sintered silicon nitride body containing Y₂O₃ and Yb₂O₃ as additives and a sintered composite part composed of a Y₂O₃ and Yb₂O₃-containing silicon nitride material matrix and containing silicon carbide particles or whiskers as a reinforcing material. These parts were each cut to a 4-mm wide, 3-mm high and 40-mm long test piece, which was C-machined all over the surface and then oxidized at 1400°C for 100 hours in air to form an oxide layer on the surface, to which plasma spray coating was to be applied. Each of the spray coating materials referred to in Table 1 was applied to the entire surface of the test piece at varying thicknesses of 50-100µm by plasma spray coating.

Oxidation and corrosion tests were done. The oxidation testing was carried out at 1400°C for 100 hours in the air according to JIS R 1609 - the oxidation resistance testing procedure for an nonoxide type of fine ceramics.

The corrosion testing was done with a high-speed combustion gas burner; that is, the sample was exposed to the gas burner using light oil as fuel at at pressure of 1 ata, a gas flow rate of 200m/sec. and a temperature of 1400°C for 10 hours. The degree of corrosion was estimated by profiling the sample surface with a surface roughness meter before and after the exposure testing. The results of the oxidation and corrosion tests are shown in Tables 1 and 2.

**Table 1**

| | Substrate | Spray Coating Material | Weight Increase by Oxidation in mg/cm² |
|---|---|---|---|
| Example 1 | SN | Alumina | 0 |
| Example 2 | SN | Mullite | 0 |
| Example 3 | SN | Zirconia | 0 |
| Example 4 | SN | Yttria | 0 |
| Example 5 | SN | Zircon | 0 |
| Example 6 | C | Alumina | 0 |
| Example 7 | C | Mullite | 0 |
| Example 8 | C | Zirconia | 0 |
| Example 9 | C | Yttria | 0 |
| Example 10 | C | Zircon | 0 |
| Comparative Example 1 | SN | - | 0.5 |
| Comparative Example 2 | C | - | 0.3 |
| Note that "SN" and "C" stand for silicon nitride and composite material, respectively, and that the "weight increase by oxidation" value is the average of three measurements. | | | |

**Table 2**

| | Substrate | Spray Coating Material | Thickness Decrease in µm |
|---|---|---|---|
| Example 1 | SN | Alumina | 0 |
| Example 2 | SN | Mullite | 0 |
| Example 3 | SN | Zirconia | 0 |
| Example 4 | SN | Yttria | 0 |
| Example 5 | SN | Zircon | 0 |
| Example 6 | C | Alumina | 0 |
| Example 7 | C | Mullite | 0 |
| Example 8 | C | Zirconia | 0 |
| Example 9 | C | Yttria | 0 |
| Example 10 | C | Zircon | 0 |
| Comparative Example 1 | SN | - | 5 |
| Comparative Example 2 | C | - | 6 |
| Note that the "thickness decrease" is the average of three measurements. | | | |

### Example 2

A number of test pieces were formed of silicon nitride and investigated as to their surface roughness and their adhesion to oxide coats. The results are set out in Table 3. The test pieces of Examples 21-25 were heat-treated at 1400°C for 10 hours in the air after machining, and the test pieces of Examples 26-30 were sand-blasted with 50% by weight of #36 silicon carbide grit and 50% by weight of #36 alumina grit. In Comparative Examples 11-15 the test pieces were mechanically processed on their as-sintered surfaces with a #140 grinder, and in Comparative Examples 16-20 the test pieces were heat-treated at 1300°C for 1 hour in the air after processing.

By plasma spray coating, these test pieces were coated with about 100-µm thick coats of oxides, namely alumina, mullite, zirconia, yttria and zircon, to obtain samples. The adhesion of the oxide coats to the surfaces of the test pieces and the heat-resistant cycle characteristics of the samples, when repeatedly subjected to a heating/cooling cycle at between room temperature and 1400°C, were measured for estimation. The results are shown in Table 3, as already mentioned.

**Table 3**

| | Surface Roughness in µm | | Spray Coating Material | A | B |
|---|---|---|---|---|---|
| | Rz | Ra | | | |
| Example 21 | 1.7 | 0.2 | Alumina | Good | Good |
| Example 22 | 1.7 | 0.2 | Mullite | Good | Good |
| Example 23 | 1.7 | 0.2 | Zirconia | Good | Good |
| Example 24 | 1.7 | 0.2 | Yttria | Good | Good |
| Example 25 | 1.7 | 0.2 | Zircon | Good | Good |
| Example 26 | 12.0 | 2.2 | Alumina | Good | Good |
| Example 27 | 12.0 | 2.2 | Mullite | Good | Good |
| Example 28 | 12.0 | 2.2 | Zirconia | Good | Good |
| Example 29 | 12.0 | 2.2 | Yttria | Good | Good |
| Example 30 | 12.0 | 2.2 | Zircon | Good | Good |
| Comparative Example 11 | 0.7 | 0.1 | Alumina | Bad | - |
| Comparative Example 12 | 0.7 | 0.1 | Mullite | Bad | - |
| Comparative Example 13 | 0.7 | 0.1 | Zirconia | Bad | - |
| Comparative Example 14 | 0.7 | 0.1 | Yttria | Bad | - |
| Comparative Example 15 | 0.7 | 0.1 | Zircon | Bad | - |
| Comparative Example 16 | 1.1 | 0.1 | Alumina | Good | Bad* |
| Comparative Example 17 | 1.1 | 0.1 | Mullite | Good | Bad* |
| Comparative Example 18 | 1.1 | 0.1 | Zirconia | Good | Bad* |
| Comparative Example 19 | 1.1 | 0.1 | Yttria | Good | Bad* |
| Comparative Example 20 | 1.1 | 0.1 | Zircon | Good | Bad* |

| | | | | | |
|---|---|---|---|---|---|
| A: Adhesion of the coats to the test pieces | | | | | |
| B: Adhesion of the coats when the samples were repeatedly subjected to a heating/cooling cycle. | | | | | |
| *: Peeling | | | | | |

The adhesion of the oxide coats was estimated by visually observing whether or not they were uniformly coated onto the surfaces of the test pieces. As can be understood from Table 3, the oxide coats adhered well to the test pieces in Examples 21-30 and Comparative Examples 16-20, but the other oxide coats adhered only locally to the test pieces with the rest peeling away.

Estimating the adhesion of the oxide coats to the test pieces was done by subjecting the samples repeatedly to a heating/cooling cycle between room temperature and 1400°C and observing the test piece/oxide coat interfaces under an optical microscope after each cycle. In Examples 21-30 no peeling was observed even after the samples had been subjected to 200 heating/cooling cycles between room temperature and 1400°C, but in Comparative Examples 16-20 peeling occurred after one such a heating/cooling cycle.

As can be understood from what has been described above, a gas turbine blade can be made which excels in surface resistance to oxidation and corrosion and so can be used without suffering any thickness decrease over extended periods of time, even under high-temperature and severe conditions. According to the methods described herein; it is possible to produce a gas turbine blade which can well stand up to use at high temperatures, and which is also good in terms of the adhesion of the oxide coat to the blade body and heat-resistance cycle characteristics.

## Claims

1. The use of an oxide thin film, not thicker than 100µm and coated on the surface of a silicon nitride-based sintered part forming a blade body of a gas turbine blade, to enhance high-temperature resistance of the blade body to operational oxidation and corrosion.

2. The use according to claim 1 in which the oxide material of the thin film is at least one selected from alumina, mullite, zirconia, yttria and zircon.

3. The use according to claim 1 or claim 2 comprising coating the thin film onto the surface of the sintered part by plasma spray coating.

4. The use according to claim 1 or claim 2 comprising coating the thin film onto the surface of the sintered part by
coating an oxide slurry onto the sintered part,
dipping the sintered part in the oxide, or
spraying an oxide layer onto the sintered part and then firing and baking.

5. The use according to claim 3 or claim 4 comprising treating the surface of the sintered part, before coating the thin film onto it, to give a surface roughness of at least 1.5µm as expressed in terms of ten-point average roughness (Rz), or a surface roughness of at least 0.2µm as expressed in terms of centre-line average roughness (Ra).

6. The use according to claim 5 in which the surface is roughened by
polishing with abrasive particles;
oxidising by heating in air; or
etching with acid.

7. The use according to any one of the preceding claims in which the silicon nitride-based sintered part is of silicon nitride or of silicon nitride reinforced with dispersed silicon carbide.

## Patentansprüche

1. Verwendung eines dünnen Oxidfilms, der nicht dicker als 100 µm und auf die Oberfläche eines Sinterbauteils auf Siliziumnitridbasis aufgetragen ist, der einen Schaufelkörper einer Gasturbinenschaufel bildet, zur Erhöhung der Hochtemperaturbeständigkeit des Schaufelkörpers gegenüber Oxidation und Korrosion während des Betriebs.

2. Verwendung nach Anspruch 1, wobei das Oxidmaterial des dünnen Films zumindest eines, ausgewählt aus Aluminiumoxid, Mullit, Zirconiumdioxid, Yttriumoxid und Zirkon, ist.

3. Verwendung nach Anspruch 1 oder 2, umfassend das Aufbringen des dünnen Films auf die Oberfläche des Sinterbauteils durch Plasmaspritzbeschichtung.

4. Verwendung nach Anspruch 1 oder 2, umfassend das Aufbringen des dünnen Films auf die Oberfläche des Sinterbauteils durch
Aufbringen einer Oxidaufschlämmung auf den Sinterbauteil,
Eintauchen des Sinterbauteils in das Oxid, oder
Aufspritzen einer Oxidschicht auf den Sinterbauteil und anschließendes Brennen und Einbrennen.

5. Verwendung nach Anspruch 3 oder 4, umfassend das Behandeln der Oberfläche des Sinterbauteils vor dem Aufbringen des dünnen Films darauf, sodaß eine Oberflächenrauhigkeit von zumindest 1,5 µm, ausgedrückt als Zehnpunkt-Mittenrauhwert (Rz), oder eine Oberflächenrauhigkeit von zumindest 0,2 µm, ausgedrückt als arithmetischer Mittenrauhwert (Ra), entsteht.

6. Verwendung nach Anspruch 5, bei der die Oberfläche durch
Polieren mit Schleifpartikeln;
Oxidieren durch Erhitzen in Luft; oder
Ätzen mit Säure
aufgerauht wird.

7. Verwendung nach einem der vorangegangenen Ansprüche, bei der der Sinterbauteil auf Siliziumnitridbasis aus Siliziumnitrid oder aus mit dispergiertem Siliziumkarbid verstärktem Siliziumnitrid besteht.

## Revendications

1. Utilisation d'un film fin d'oxyde, pas plus épais que 100 µm et revêtu sur la surface d'une partie frittée à base de nitrure de silicium formant un corps de lame d'une lame de turbine à gaz, pour augmenter la résistance aux températures élevées du corps de lame à une oxydation et corrosion en opération.

2. Utilisation selon la revendication 1, dans laquelle le matériau d'oxyde du film fin est au moins un matériau choisi parmi l'alumine, la mullite, la zircone, l'oxyde d'yttrium et le zircon.

3. Utilisation selon la revendication 1 ou la revendication 2, comprenant le revêtement du film fin sur la surface de la partie frittée par revêtement par vaporisation par plasma.

4. Utilisation selon la revendication 1 ou la revendication 2, comprenant le revêtement de film fin sur la surface de la partie frittée par
revêtement d'une boue d'oxyde sur la partie frittée,
trempage de la partie frittée dans l'oxyde, ou
vaporisation d'une couche d'oxyde sur la partie frittée et ensuite calcination et cuisson.

5. Utilisation selon la revendication 3 ou la revendication 4, comprenant le traitement de la surface de la partie frittée, avant revêtement du film fin sur elle, pour donner une rugosité de surface d'au moins 1,5 µm exprimée en termes de rugosité de surface sur dix points (Rz), ou une rugosité de surface d'au moins 0,2 µm exprimée en termes de rugosité moyenne à la ligne centrale (Ra).

6. Utilisation selon la revendication 5, dans laquelle la surface est rendue rugueuse par
polissage avec des particules abrasives ;
oxydation par chauffage dans l'air ; ou
gravure avec un acide.

7. Utilisation selon l'une quelconque des revendications précédentes, dans laquelle la partie frittée à base de nitrure de silicium est en nitrure de silicium ou en nitrure de silicium renforcé de carbure de silicium dispersé.
